# EUROPEAN PATENT SPECIFICATION

(11) **EP 2 447 027 B1**
(45) Date of publication and mention of the grant of the patent: **27.12.2017**
(21) Application number: 11184042.7
(22) Date of filing: 05.10.2011
(51) Int. Cl.: B29B 13/06, F26B 25/00, F26B 17/14, F26B 21/12, F26B 21/08

(54) **A dehumidification process for granular plastic material and a dehumidification plant operating according to the process**
Entfeuchtungsverfahren für körniges Kunststoffmaterial und eine nach diesem Verfahren funktionierende Entfeuchtungsanlage
Procédé de déshumidification pour matériaux granulaires en plastique et installation de déshumidification fonctionnant selon le procédé

(30) Priority: 27.10.2010 IT PD20100324
(43) Date of publication of application: 02.05.2012
(73) Proprietor: Plastic Systems S.p.A., 35010 Borgoricco (PD) (IT)
(72) Inventor: Cattapan, Gianfranco, 35011 Campodarsego (IT)
(74) Representative: Susanetto, Carlo

(56) References cited:
- EP-A1- 2 186 613
- EP-A2- 0 416 475
- DE-A1- 2 455 335
- DE-A1- 3 936 009
- US-A1- 2006 168 843

## Description

### Technical field

The present invention relates to a process of dehumidifying plastic material in granules, having the characteristics stated in the preamble of the principal claim. It also relates to a dehumidification plant operating according to this process and having the characteristics stated in the preamble of Claim 13.

### Background art

The invention is particularly, but not exclusively, applicable to industrial processes for forming plastic materials in granules by moulding.

It is known that such operations require the plastic material placed in the moulds to be as free of moisture as possible, in order to achieve a suitable level of quality in the moulded product.

However, this means that problems arise as a result of the highly hygroscopic properties of some plastic materials which are widely used in this field, such as those based on polyethylene terephthalate (PET), polyamides (PA), polycarbonates (PC), or ABS copolymers.

Before these plastic materials are used in the moulding process, therefore, they must be suitably dehumidified in dehumidification plants in which the granules of plastic material are exposed, in a hopper, to a flow of process gas at high temperature and with a low moisture level, which decreases the water content of the granules.

As a general rule, the dehumidification process comprises the steps of loading the granules of plastic material into the hopper, dehumidifying them by means of the flow of process gas, and then discharging them into the processing machines which provide for the subsequent working steps.

When the process gas, normally air, leaves the hopper, it is directed to a blower which sends the gas to a dehumidification unit which reduces the moisture content of the gas, and when the gas has been suitably heated, it is reintroduced into the hopper.

In this field there are known dehumidification plants in which the quantity of granules of plastic material loaded into and discharged from the hopper is measured so that the flow rate of process gas introduced into the hopper can be regulated appropriately.

Examples of these plants are described in EP 2186613 and US 2006/168843 that both disclose the preamble of claim 1 and the preamble of claim 13. However, there is still a need to provide a dehumidification process which optimizes the step of dehumidifying the plastic material in the hopper, not only in terms of process gas flow rate, but also, and primarily, in terms of the residence time of the plastic material in the hopper, which generally varies with the discharge flow rate of the plastic material, while ensuring that the process is as adaptable as possible to the amount of plastic material required by the subsequent processing machines, and while simultaneously minimizing the possible wastage of energy and/or material and the direct intervention of operators.

### Description of the invention

The problem tackled by the present invention is that of providing a process of dehumidifying plastic material in granules and a dehumidification plant operating according to this process, which are structurally and functionally designed to meet the requirement outlined above, thus overcoming the aforementioned limitations of the cited prior art.

Within the scope of this problem, another object of the invention is to develop a process which is reliable and easily implemented.

This problem is resolved and this object is achieved by the present invention by means of a process and a plant designed in accordance with the claims appended below.

### Brief description of the drawings

The features and advantages of the invention will be made clearer by the following detailed description of a preferred embodiment thereof, illustrated, for the purposes of guidance and without limitative intent, with reference to the attached drawings, in which:
- Figure 1 is a process diagram illustrating the operation of a dehumidification plant designed to operate according to the process of the present invention;
- Figure 2 is a schematic perspective view of a portion of the plant of Figure 1;
- Figure 3 is a view of the plant of Figure 2 seen from a different side.

### Preferred embodiment of the invention

In the drawings, the number 1 indicates the whole of a dehumidification plant designed to operate by a process according to the present invention.

The plant 1 is intended to dehumidify hygroscopic plastic material in granules, for example materials based on PET or PA or PC or ABS, and comprises a hopper 2 which is connected at its inlet aperture 2a to loading means of the plastic material, and is connected at its outlet 2b to a processing machine M, such as a press for moulding plastic material, located downstream of the dehumidification plant 1. It should be noted that only one processing machine M is shown in this exemplary embodiment, but the plant can advantageously be made to serve a plurality of processing machines which may or may not have different characteristics in terms of their production processes.

The loading means of the plastic material in granules comprise a first pneumatic transport circuit 3, connected to a unit A for storing the plastic material to be dehumidified, in which is fitted a cyclone 4 which opens immediately above the inlet aperture 2a of the hopper 2.

The cyclone 4 is also connected through a shut-off valve 5 to an intake line 6 of the first pneumatic transport circuit 3.

Similarly, the plastic material is transferred from the outlet 2b of the hopper 2 to the processing machine M by discharge means of the hopper, comprising a second pneumatic transport circuit 7 which includes a cyclone 8 which opens into the processing machine M and which is connected through a shut-off valve 9 to an intake line 10 of the second pneumatic transport circuit 7. The outlet 2b of the hopper 2 is made to communicate with the second pneumatic circuit 7 by means of a discharge valve 7a.

The plant 1 also comprises a feed circuit 11 for a process gas, which is suitably prepared to dehumidify the plastic material present in the hopper 2. The process gas, for example suitably dried and heated air, is introduced into the hopper 2 through a diffuser 12 of a conventional type connected to a blower 13. The blower is driven by an electric motor 14 which is controlled by an inverter 15 which regulates its speed, the whole of this assembly thus forming means of regulating the flow rate of the process gas.

The process gas leaving the hopper 2 is then recirculated to the intake of the blower 13 along a line 16 where it is filtered in a filter 16a before it reaches the blower.

The feed circuit 11 also includes a unit 17 for dehumidifying the process gas, which is interposed between the delivery end of the blower 13 and the hopper 2.

The dehumidification unit 17 serves to reduce the moisture content of the process gas to a desired level which is normally measured by the dew point parameter.

The dehumidification unit 17 can be of any known type, but is preferably of the continuously regenerated molecular sieve type. In this type of dehumidification unit, the molecular sieves are continuously rotated from a first absorption sector 17a, where they are exposed to the flow of process gas from the blower 13, to a second regeneration sector 17b where they are exposed to a flow of regeneration gas, and then to a third sector 17c where they are subjected to a flow of cooling gas, before returning to the first absorption sector 17a.

In particular, the feed circuit 11 conveys the process gas impelled by the blower 13 to the first sector 17a of the dehumidification unit 17, in such a way that, by passing through the molecular sieves, the moisture level of the gas is reduced so that the dew point reaches the desired value, typically in the range from -25°C to -50°C.

Preferably, a branch line 18 runs from the part of the feed circuit 11 leaving the first sector 17a, and carries some of the dehumidified process gas to the third sector 17c to cool the molecular sieves. The process gas leaving the third sector 17c is then recycled through a line 19 to the line 16 and the intake of the blower 13.

The second regeneration sector 17b is connected to a regeneration circuit 20, where a gas, generally air, which has been filtered in a filter 21 and preheated in a heat exchanger 22 by means of the process gas leaving the hopper 2, is impelled by a blower 23 into a heater 24, where it reaches a predetermined temperature, and is then sent to the second regeneration sector 17b.

In order to recover as much energy as possible, the line 19 containing the gas leaving the third sector 17c is returned to the line 16 upstream of the heat exchanger 22.

Downstream of the dehumidification unit 17, the process gas feed circuit 11 has a heater 25 which brings the process gas to a predetermined temperature, typically in the range from 65° to 180°, before feeding it into the hopper 2.

Preferably, the intake line 10 of the second pneumatic transport circuit 7 is placed within the intake line 6 of the first pneumatic transport circuit 3 downstream of the shut-off valve 5.

Additionally, in a preferred embodiment, the intake line 6 of the first pneumatic transport circuit 3 can be connected to the line 16 of the process gas feed circuit 11, leading to the intake of the blower 13.

In particular, the feed circuit 11 has first selector valves 30 to connect the intake of the blower 13 alternatively to the outlet of the hopper 2 or to the intake line 6 of the first pneumatic transport circuit 3.

A second selector valve 31 is also provided at the delivery end of the blower 13 to connect the delivery end of the blower 13, alternatively, to the dehumidification unit 17, and thus to the hopper 2, or to a discharge point 32.

Thus, by appropriate operation of the first and second selector valves 30 and 31 and the shut-off valves 5 and 9, the same blower 13 can be used to circulate the process gas in the feed circuit 11, or to load the plastic material in granules into the hopper 2 by means of the first pneumatic transport circuit 3, or to discharge the plastic material in granules from the hopper 2 and feed it to the processing machine M.

The dehumidification plant 1 also comprises a system for measuring the plastic material discharged from the hopper 2, this system preferably including one or more load cells 33 on which the hopper 2 rests.

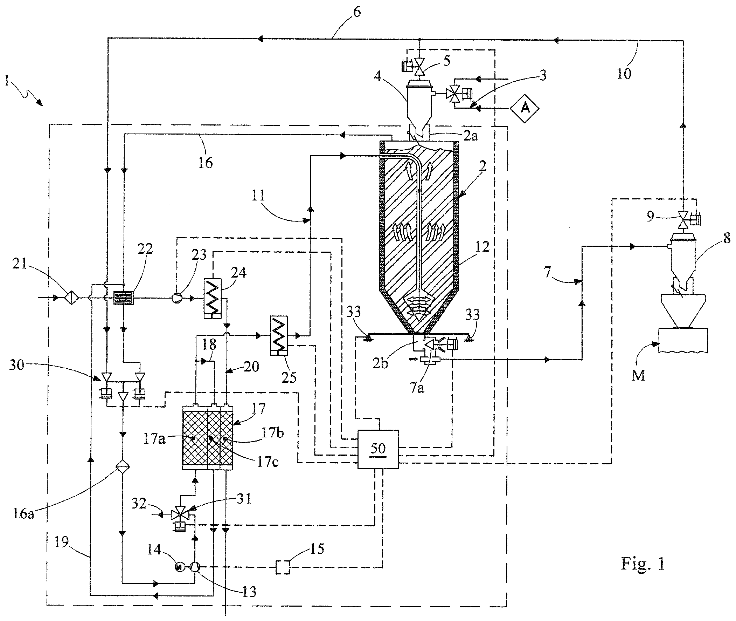

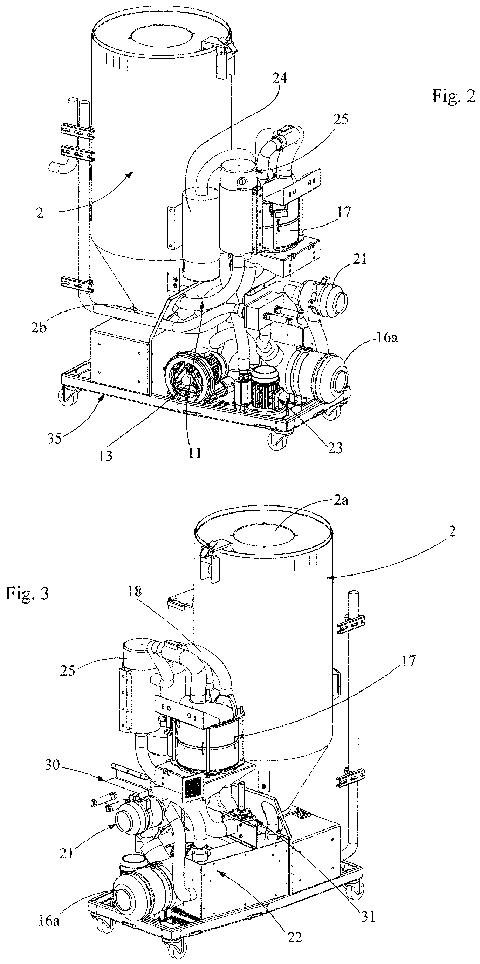

In a preferred embodiment, shown in Figures 2 and 3, the dehumidification plant 1, not including the first and second pneumatic transport circuits 3 and 11, is conveniently mounted on a trolley 35 so as to be more easily movable for any necessary maintenance or between one processing machine and another. The portion of the plant 1 is shown in broken lines in Figure 1.

If necessary, however, the portion of the plant 1 mounted on the trolley 35 can be modified, increased or reduced according to the specific requirements of the process.

The dehumidification plant 1 also comprises a control unit 50 designed for the control and management of the dehumidification process carried out in the plant 1, which takes place in the following way.

Initially, the operator inputs into the control unit 50 the type of plastic material to be processed, an initial hourly discharge flow rate of plastic material if required (this amount being generally equal to the value of hourly output of the processing machine M or the sum of hourly outputs of the processing machines if there is more than one), and the total required production, in other words the total quantity of plastic material to be processed.

On the basis of this information, the control unit 50 determines the temperature and an initial flow rate of the process gas and an initial load level of the hopper which enables the plastic material to remain in the hopper for an appropriate residence time for the characteristics of the specific type of plastic material being processed.

The plastic material in granules to be dehumidified is initially loaded into the hopper 2 by means of the first pneumatic transporter 3. The blower 13 is set to the maximum speed in order to minimize the loading times, and the first and second selector valves 30 and 31 are operated so as to put the blower 13 into communication with the intake line 6 and the discharge point 32.

Thus the plastic material drawn in by the action of the blower 13 enters the cyclone 4, where it is separated and discharged into the hopper 2, while the conveying air is drawn in by the blower 13 through the first selector valves 30 and is sent to the discharge point 32 through the second selector valve 31.

When the initial hopper load level is reached, the loading procedure is stopped, the shut-off valve 5 is closed, and the first and second selector valves 30 and 31 are switched so as to circulate the process gas through the feed circuit 11 to the hopper 2 and subsequently from the hopper back to the blower 13.

When the process gas has been appropriately dehumidified in the first sector of the regeneration unit 17, it is heated in the heater 25 to the process temperature determined by the control unit as a function of the type of plastic material to be processed. The flow rate of the process gas is set by regulating the speed of the blower 13 by means of the control unit 50 which acts on the inverter 15.

The process gas leaving the hopper 2 gives up some of its heat in the heat exchanger 22 to the gas in the regeneration circuit, and is then filtered by the filter 16a and returned to the blower 13.

After a suitable residence time in the hopper 2, the dehumidified plastic material can be discharged and transferred to the processing machine M.

In order to discharge the plastic material, the first selector valves 30 are switched to connect the intake line 6 to the blower 13, and the shut-off valve 9 and the discharge valve 7a are also opened, while the shut-off valve 5 is kept closed.

Thus the dehumidified plastic material is transferred through the second pneumatic circuit 7 to the cyclone 8 where it is fed to the processing machine M.

At the end of the discharge procedure, the shut-off valve 9 is closed and the first and second selector valves 30 and 31 are returned to the position in which the process gas is recirculated.

The procedure for discharging the material from the hopper 2 is controlled by the information on the requirement for plastic material which is sent directly from the processing machine M (or from one of the processing machines if there is more than one of them).

The quantity of plastic material discharged from the hopper 2 is measured by the control unit 50, which derives this quantity from the difference in weight detected in the load cells 33 before and after the discharge operation. This measurement is made for each discharge of plastic material from the hopper 2.

The control unit 50 records the quantity of plastic material discharged in one or more steps, within a predetermined period, in order to calculate a mean hourly flow rate of discharged plastic material, which can generally be different from the initial hourly flow rate.

On the basis of this new information on the mean hourly flow rate of discharged plastic material, the control unit 50 determines an effective process gas flow rate which is appropriate for the required production of dehumidified plastic material, in that it enables the plastic material present in the hopper 2 to be correctly dehumidified. Additionally, and again on the basis of the newly acquired information on the mean hourly flow rate of discharged plastic material, the control unit 50 determines an effective load level of the hopper which ensures that the residence time of any plastic material loaded into the hopper is correct.

The control unit 50 therefore acts on the process gas flow rate regulation means, in other words on the inverter 15 of the blower 13, in order to bring the process gas flow rate to the effective process gas flow rate calculated as described above.

In the same way, when new plastic material is to be loaded into the hopper 2 for dehumidification, the loading process is stopped when the effective load level, as determined by the control unit 50, is reached.

At the end of a first predetermined period, the control unit 50 restarts the measurement of the plastic material discharged for the next predetermined period, thus determining new effective process gas flow rates and effective load levels which are used to update the previously calculated values, resulting if necessary in a new regulation of the process gas flow rate and a new setting of the load level in the hopper.

The steps of measurement, calculation and regulation carried out by the control unit 50 are repeated continuously throughout the dehumidification process.

Thus the dehumidification plant 1 can be adapted in an effective manner to the variations in output of the processing machines downstream of it, without the need for intervention by the operator. This is because the output of the processing machine and the dehumidification plant 1 may change during the processing time, and the requirement for material from the hopper will vary correspondingly. Clearly, this is even more likely when the dehumidification plant 1 is serving a plurality of processing machines.

This variation in the requirement for plastic material is measured by the control unit 50 which, as described above, automatically regulates the parameters of the dehumidification process in order to adapt them to the new production circumstances.

This also requires the optimization of the energy use in the process and the maintenance of high quality in the dehumidified product.

In order to ensure a reliable determination of the mean hourly flow rate of discharged plastic material, the predetermined period within which the discharged plastic material is measured should be sufficiently long to enable the maximum and minimum values to be averaged more satisfactorily.

However, for the sake of simplicity, the mean hourly flow rates used to calculate the new effective process gas flow rates and the effective load level are those determined in the predetermined periods during which the loading of plastic material into the hopper does not take place. In this case, therefore, the predetermined period must not be too long, in order to avoid the need for continual loading operations during the predetermined periods.

The predetermined period is preferably in the range from 5 to 20 minutes.

The step of loading the hopper 2 starts when a specified minimum level in the hopper 2 is reached, provided that at least one predetermined period has elapsed and that an effective load level is achievable. As stated previously, the blower 13 is brought to its maximum speed during the loading step in order to minimize loading time.

The control unit 50 stops the loading step when the effective load level is reached, as determined in the last predetermined period in which the discharged plastic material was measured.

The control unit also measures the quantity of plastic material loaded into the hopper 2 during the subsequent loading steps, again by means of the load cells 33.

In this way, once the total amount of plastic material to be processed has been set, it is possible to determine when the total amount of material loaded into the hopper in the successive loading operations has reached a level such that any subsequent loading operation is to be prevented. In this way also, once the hopper 2 has been emptied, the control unit 50 starts the procedure of automatically stopping the plant 1. It must be noted that the "emptying" of the hopper does not necessarily have to be complete.

Thus the present invention overcomes the aforementioned drawbacks of the prior art, while providing many other benefits, including a very high degree of adaptation of the plant to the production requirements of the downstream processing machines without the intervention of the operator.

## Claims

1. A process of dehumidifying plastic material in granules, comprising the steps of:
- introducing a quantity of plastic material to be dehumidified into a hopper (2);
- bringing said plastic material into contact with a process gas having a specified temperature and moisture content which is introduced into said hopper at a specified flow rate in order to dehumidify said plastic material;
- discharging at least some of said plastic material from said hopper at successive times;
- measuring the quantity of plastic material discharged from said hopper in a specified period and calculating a mean hourly flow rate of the discharged plastic material;
- determining an effective flow rate of process gas as a function of said mean hourly flow rate of discharged plastic material, and regulating accordingly the flow rate of process gas introduced into said hopper; and
**characterized in that** it comprises the steps of:
- determining an effective load level of the hopper as a function of said mean hourly flow rate of discharged plastic material so as to ensure that the plastic material remains inside said hopper for a suitable period;
- loading said plastic material into said hopper, when required, up to said effective load level.

2. A process according to Claim 1, wherein the process gas is introduced into said hopper by means of a blower (13) and said flow rate of process gas is regulated by varying the speed of said blower.

3. A process according to Claim 2, wherein said plastic material is loaded into said hopper by means of a first pneumatic transport circuit (3) actuated by said blower.

4. A process according to Claim 3, wherein, during said step of loading the plastic material, said blower is set to maximum speed and its delivery end is disconnected from said hopper.

5. A process according to Claim 2 or 3, wherein the discharge of plastic material from said hopper is stopped during said step of loading the plastic material.

6. A process according to any one of the preceding claims, wherein said hopper is connected to at least one downstream apparatus (M) which uses said plastic material and said plastic material is discharged from said hopper at the command of said at least one user apparatus.

7. A process according to any one of Claims 2 to 6, wherein said plastic material is discharged from said hopper by means of a second pneumatic transport circuit (7) actuated by said blower.

8. A process according to any one of the preceding claims, wherein said measurement of the discharged plastic material is repeated continuously in successive specified periods of time.

9. A process according to any one of the preceding claims, wherein said measurement of the discharged plastic material is carried out on the basis of the difference in weight of the hopper in said specified period of time, during which no plastic material is loaded into the hopper.

10. A process according to Claim 9, wherein said specified period of time is in the range from 5 to 20 minutes.

11. A process according to any one of the preceding claims, wherein said step of loading the plastic material into the hopper takes place when a specified minimum level has been reached in the hopper, provided that at least one of said specified periods of time has elapsed.

12. A process according to any one of the preceding claims, wherein the plastic material loaded into the hopper is measured for each loading operation, and the hopper loading function is stopped when the amount of plastic material loaded into the hopper reaches a predetermined production level, thus enabling the process to be stopped after the emptying of the hopper.

13. A dehumidification plant for plastic material in granules, comprising:
- a hopper (2) into which the plastic material to be dehumidified is introduced;
- a circuit (11) for introducing a process gas for dehumidifying said plastic material into said hopper;
- means (15) of regulating the flow rate of said process gas into said hopper;
- means (7) of discharging said plastic material from said hopper;
- a system (33) for measuring the plastic material discharged from said hopper;
- means (3) of loading said plastic material into said hopper;
- a control unit (50) for said plant, and
**characterized in that** said control unit is arranged for:
- measuring the quantity of plastic material discharged from said hopper in a specified period and calculating a mean hourly flow rate of the discharged plastic material;
- determining an effective flow rate of process gas and an effective load level of the hopper as a function of said mean hourly flow rate of discharged plastic material;
- acting on said means of regulating the flow rate of said process gas to achieve said effective process gas flow rate;
- acting on said means of loading the plastic material to prevent the loading of plastic material when the plastic material reaches said effective load level.

14. A plant according to Claim 13, wherein said system of measuring the discharged plastic material comprises one or more load cells (33) on which said hopper is mounted.

15. A plant according to Claim 13 or 14, wherein said process gas introduction circuit comprises a blower (13) and said means of regulating the flow rate of said process gas comprise an inverter (15) connected for operation to said blower.

16. A plant according to Claim 15, wherein said means of loading the plastic material into the hopper comprise a first pneumatic transport system (3) connectable to the intake of said blower.

17. A plant according to Claim 16, wherein said process gas introduction circuit enables the process gas leaving said hopper to be recirculated into said blower, and first selector valves (30) are provided to connect the intake of said blower alternatively to the output of said hopper or to said first pneumatic transport circuit.

18. A plant according to Claim 16 or 17, wherein a second selector valve (31) is provided in said process gas introduction circuit to connect the delivery end of said blower alternatively to the inlet of said hopper or to a discharge outlet (32).

19. A plant according to any one of Claims 15 to 18, wherein said hopper can be connected to at least one machine (M) which uses said plastic material, in order to transfer the plastic material discharged from the hopper to said at least one user machine by means of a second pneumatic transport circuit (7) connectable to the intake of said blower.

20. A plant according to Claim 19, wherein said second pneumatic transport circuit is connected to said first pneumatic transport circuit upstream of said first selector valves.

21. A plant according to any one of Claims 15 to 20, wherein a process gas dehumidification unit (17) is interposed in said process gas introduction circuit between said blower and said hopper, said dehumidification unit being of the continuous regeneration type.

## Patentansprüche

1. Verfahren zum Entfeuchten von körnigem Kunststoffmaterial, das die Schritte umfasst:
- Einleiten einer Menge von zu entfeuchtendem Kunststoffmaterial in einen Trichter (2);
- Bewirken, dass das Kunststoffmaterial mit einem Prozessgas in Kontakt kommt, das eine bestimmte Temperatur und einen Feuchtigkeitsgehalt aufweist, das in den Trichter mit einer bestimmten Durchflussrate eingeleitet wird, um das Kunststoffmaterial zu entfeuchten;
- Abgeben von zumindest etwas Kunststoffmaterial vom Trichter zu sukzessiven Zeitpunkten;
- Messen der Menge von Kunststoffmaterial, das vom Trichter in einer bestimmten Zeitdauer abgegeben wird und Berechnen einer mittleren stündlichen Durchflussrate des abgegebenen Kunststoffmaterials;
- Bestimmen einer effektiven Durchflussrate des Prozessgases als Funktion der mittleren stündlichen Durchflussrate des abgegebenen Kunststoffmaterials und Regulieren gemäß der Durchflussrate des Prozessgases, das in den Trichter eingeleitet wird; und
- **dadurch gekennzeichnet, dass** es die Schritte umfasst:
- Bestimmen eines effektiven Belastungsniveaus des Trichters als Funktion der mittleren stündlichen Durchflussrate des abgegebenen Kunststoffmaterials, um so zu gewährleisten, dass das Kunststoffmaterial für eine angemessene Zeitdauer innerhalb des Trichters verbleibt;
- Einfüllen des Kunststoffmaterials in den Trichter, wenn erforderlich, bis zum effektiven Belastungsniveaus.

2. Verfahren gemäß Anspruch 1, wobei das Prozessgas in den Trichter mittels eines Gebläses (13) eingeleitet wird und die Durchflussrate des Prozessgases durch Verändern der Geschwindigkeit des Gebläses reguliert wird.

3. Verfahren gemäß Anspruch 2, wobei das Kunststoffmaterial in den Trichter mittels eines ersten pneumatischen Förderkreislaufes (3), der durch das Gebläse betätigt wird, eingefüllt wird.

4. Verfahren gemäß Anspruch 3, wobei das Gebläse während des Schrittes zum Einfüllen des Kunststoffmaterials auf eine maximale Geschwindigkeit festgelegt ist und sein Förderende vom Trichter getrennt ist.

5. Verfahren gemäß Anspruch 2 oder 3, wobei die Abgabe des Kunststoffmaterials vom Trichter während des Schritts zum Einfüllen des Kunststoffmaterials gestoppt wird.

6. Verfahren gemäß einem der vorhergehenden Ansprüche, wobei der Trichter mit zumindest einer stromabwärts liegenden Vorrichtung (M) verbunden ist, die das Kunststoffmaterial verarbeitet, und das Kunststoffmaterial vom Trichter auf Befehl der zumindest einen Verarbeitungsvorrichtung abgegeben wird.

7. Verfahren gemäß einem der Ansprüche 2 bis 6, wobei das Kunststoffmaterial vom Trichter mittels eines zweiten pneumatischen Förderkreislaufes (7), der durch das Gebläse betätigt wird, abgegeben wird.

8. Verfahren gemäß einem der vorhergehenden Ansprüche, wobei die Messung des abgegebenen Kunststoffmaterials kontinuierlich in sukzessiven bestimmten Zeitdauern wiederholt wird.

9. Verfahren gemäß einem der vorhergehenden Ansprüche, wobei die Messung des abgegebenen Materials auf der Basis des Gewichtsunterschiedes des Trichters in der bestimmten Zeitdauer ausgeführt wird, während der kein Kunststoffmaterial in den Trichter eingefüllt wird.

10. Verfahren gemäß Anspruch 9, wobei die bestimmte Zeitdauer im Bereich von 5 bis 20 Minuten liegt.

11. Verfahren gemäß einem der vorhergehenden Ansprüche, wobei der Schritt zum Einfüllen des Kunststoffmaterials in den Trichter stattfindet, wenn ein bestimmtes minimales Niveau im Trichter erreicht worden ist, der vorgesehen ist, dass zumindest eine der bestimmten Zeitdauern verstrichen ist.

12. Verfahren gemäß einem der vorhergehenden Ansprüche, wobei das Kunststoffmaterial, das in den Trichter eingefüllt wird, für jeden Belastungsvorgang gemessen wird, und die Trichter-Einfüllfunktion gestoppt wird, wenn die Menge des Kunststoffmaterials, das in den Trichter eingefüllt wird, ein vorbestimmtes Produktionsniveau erreicht, wodurch ermöglicht wird, das Verfahren nach dem Entleeren des Trichters zu stoppen.

13. Entfeuchtungsanlage für körniges Kunststoffmaterial, umfassend:
- einen Trichter (2), in den das zu entfeuchtende Kunststoffmaterial eingeleitet wird;
- einen Kreislauf (11) zum Einleiten eines Prozessgases zum Entfeuchten des Kunststoffmaterials in den Trichter;
- eine Einrichtung (15) zum Regulieren der Durchflussrate des Prozessgases in den Trichter;
- eine Einrichtung (7) zum Abgeben des Kunststoffmaterials vom Trichter;
- ein System (33) zum Messen des Kunststoffmaterials, das vom Trichter abgegeben wird;
- eine Einrichtung (3) zum Einfüllen des Kunststoffmaterials in den Trichter;
- eine Steuereinheit (50) für die Anlage, und
- **dadurch gekennzeichnet, dass** die Steuereinheit angeordnet ist zum:
- Messen der Menge des Kunststoffmaterials, das vom Trichter in einer bestimmten Zeitdauer abgegeben wird, und Berechnen einer mittleren stündlichen Durchflussrate des abgegebenen Kunststoffmaterials;
- Bestimmen einer effektiven Durchflussrate von Prozessgas und eines effektiven Belastungsniveaus des Trichters als Funktion der mittleren stündlichen Durchflussrate des abgegebenen Kunststoffmaterials;
- Beeinflussen der Einrichtung zum Regulieren der Durchflussrate des Prozessgases, um die effektive Prozessgas-Durchflussrate zu erreichen;
- Beeinflussen der Einrichtung zum Einfüllen des Kunststoffmaterials, um das Einfüllen des Kunststoffmaterials zu verhindern, wenn das Kunststoffmaterial das effektive Einfüllniveau erreicht.

14. Anlage gemäß Anspruch 13, wobei das System zum Messen des abgegebenen Kunststoffmaterials eine oder mehrere Wägezellen (33) aufweist, auf denen der Trichter befestigt ist.

15. Anlage gemäß Anspruch 13 oder 14, wobei der Prozessgas-Einleitungskreislauf ein Gebläse (13) aufweist und die Einrichtung zum Regulieren der Durchflussrate des Prozessgases einen Inverter (15) aufweist, der zum Betrieb mit dem Gebläse verbunden ist.

16. Anlage gemäß Anspruch 15, wobei die Einrichtung zum Einfüllen des Kunststoffmaterials in den Trichter ein erstes pneumatisches Fördersystem (3) aufweist, das mit dem Ansaugbereich des Gebläses verbindbar ist.

17. Anlage gemäß Anspruch 16, wobei der Prozessgas-Einleitungskreislauf dem Prozessgas ermöglicht, den Trichter zu verlassen, um in das Gebläse zurückgeführt zu werden, und erste Umschaltventile (30) vorgesehen sind, um den Ansaugbereich des Gebläses abwechselnd mit dem Ausgang des Gebläses oder mit dem ersten pneumatischen Förderkreislauf zu verbinden.

18. Anlage gemäß Anspruch 16 oder 17, wobei ein zweites Umschaltventil (31) im Prozessgas-Einleitungskreislauf vorgesehen ist, um das Förderende des Gebläses abwechselnd mit dem Einlass des Trichters oder mit einem Auslass (32) zu verbinden.

19. Anlage gemäß einem der Ansprüche 15 bis 18, wobei der Trichter mit zumindest einer Maschine (M) verbunden werden kann, die das Kunststoffmaterial verarbeitet, um das Kunststoffmaterial, das vom Trichter abgegeben wird, zur zumindest einen Verarbeitungsmaschine mittels eines zweiten pneumatischen Förderkreislaufes (7), der mit dem Ansaugbereich des Gebläses verbindbar ist, zu übertragen.

20. Anlage gemäß Anspruch 19, wobei der zweite pneumatische Förderkreislauf mit dem ersten pneumatischen Förderkreislauf stromaufwärts der ersten Umschaltventile verbunden ist.

21. Anlage gemäß einem der Ansprüche 15 bis 20, wobei eine Prozessgas-Entfeuchtungseinheit (17) im Prozessgas-Einleitungskreislauf zwischen dem Gebläse und dem Trichter angeordnet ist, wobei die Entfeuchtungseinheit ein kontinuierlich regenerierender Typ ist.

## Revendications

1. Procédé de déshumidification de matériau granulaire en plastique, comprenant les étapes de :
- introduire une quantité de matériau en plastique à déshumidifier dans une trémie (2) ;
- mettre en contact ledit matériau en plastique avec un gaz de procédé ayant une température et une teneur en humidité prédéfinies qui est introduit dans ladite trémie à un débit prédéfini afin de déshumidifier ledit matériau en plastique ;
- évacuer au moins une partie dudit matériau en plastique de ladite trémie à des moments successifs ;
- mesurer la quantité de matériau en plastique évacuée de ladite trémie dans une période prédéfinie et calculer un débit horaire moyen du matériau en plastique évacué ;
- déterminer un débit efficace de gaz de procédé en fonction dudit débit horaire moyen de matériau en plastique évacué, et réguler en conséquence le débit de gaz de procédé introduit dans ladite trémie ; et
**caractérisé en ce qu'**il comprend les étapes de :
- déterminer un niveau de charge efficace de la trémie en fonction dudit débit horaire moyen de matériau en plastique évacué de manière à garantir que le matériau en plastique reste à l'intérieur de ladite trémie pendant une période adaptée ;
- charger ledit matériau en plastique dans ladite trémie, lorsque cela est nécessaire, jusqu'audit niveau de charge efficace.

2. Procédé selon la revendication 1, dans lequel le gaz de procédé est introduit dans ladite trémie au moyen d'un souffleur (13) et ledit débit de gaz de procédé est régulé en faisant varier la vitesse dudit souffleur.

3. Procédé selon la revendication 2, dans lequel ledit matériau en plastique est chargé dans ladite trémie au moyen d'un premier circuit de transport pneumatique (3) actionné par ledit souffleur.

4. Procédé selon la revendication 3, dans lequel, pendant ladite étape de chargement du matériau en plastique, ledit souffleur est réglé à la vitesse maximale et son extrémité de déversement est déconnectée de ladite trémie.

5. Procédé selon la revendication 2 ou 3, dans lequel l'évacuation du matériau en plastique de ladite trémie est arrêtée pendant ladite étape de chargement du matériau en plastique.

6. Procédé selon l'une quelconque des revendications précédentes, dans lequel ladite trémie est connectée à au moins un appareil en aval (M) qui utilise ledit matériau en plastique et ledit matériau en plastique est évacué de ladite trémie à la commande dudit au moins un appareil d'utilisateur.

7. Procédé selon l'une quelconque des revendications 2 à 6, dans lequel ledit matériau en plastique est évacué de ladite trémie au moyen d'un second circuit de transport pneumatique (7) actionné par ledit souffleur.

8. Procédé selon l'une quelconque des revendications précédentes, dans lequel ladite mesure du matériau en plastique évacué est répétée continuellement dans des périodes prédéfinies successives.

9. Procédé selon l'une quelconque des revendications précédentes, dans lequel ladite mesure du matériau en plastique évacué est réalisée sur la base de la différence en poids de la trémie dans ladite période prédéfinie, pendant laquelle aucun matériau en plastique n'est chargé dans la trémie.

10. Procédé selon la revendication 9, dans lequel ladite période prédéfinie se situe dans la plage de 5 à 20 minutes.

11. Procédé selon l'une quelconque des revendications précédentes, dans lequel ladite étape de chargement du matériau en plastique dans la trémie a lieu quand un niveau minimal prédéfini a été atteint dans la trémie, dans la mesure où au moins une desdites périodes prédéfinies s'est écoulée.

12. Procédé selon l'une quelconque des revendications précédentes, dans lequel le matériau en plastique chargé dans la trémie est mesuré pour chaque opération de chargement, et la fonction de chargement de la trémie est arrêtée quand la quantité de matériau en plastique chargée dans la trémie atteint un niveau de production prédéterminé, permettant ainsi d'arrêter le procédé après la vidange de la trémie.

13. Installation de déshumidification pour matériau granulaire en plastique, comprenant :
- une trémie (2) dans laquelle le matériau en plastique à déshumidifier est introduit ;
- un circuit (11) pour introduire un gaz de procédé pour déshumidifier ledit matériau en plastique dans ladite trémie ;
- des moyens (15) de régulation du débit dudit gaz de procédé dans ladite trémie ;
- des moyens (7) d'évacuation dudit matériau en plastique de ladite trémie ;
- un système (33) pour mesurer le matériau en plastique évacué de ladite trémie ;
- des moyens (3) de chargement dudit matériau en plastique dans ladite trémie ;
- une unité de commande (50) pour ladite installation, et
**caractérisé en ce que** ladite unité de commande est agencée pour :
- mesurer la quantité de matériau en plastique évacué de ladite trémie dans une période prédéfinie et calculer un débit horaire moyen du matériau en plastique évacué ;
- déterminer un débit efficace de gaz de procédé et un niveau de charge efficace de la trémie en fonction dudit débit horaire moyen de matériau en plastique évacué ;
- agir sur lesdits moyens de régulation du débit dudit gaz de procédé pour obtenir ledit débit de gaz de procédé efficace ;
- agir sur lesdits moyens de chargement du matériau en plastique pour empêcher le chargement de matériau en plastique quand le matériau en plastique atteint ledit niveau de charge efficace.

14. Installation selon la revendication 13, dans laquelle ledit système de mesure du matériau en plastique évacué comprend une ou plusieurs cellules de charge (33) sur lesquelles ladite trémie est montée.

15. Installation selon la revendication 13 ou 14, dans laquelle ledit circuit d'introduction de gaz de procédé comprend un souffleur (13) et lesdits moyens de régulation du débit dudit gaz de procédé comprennent un inverseur (15) connecté pour le fonctionnement audit souffleur.

16. Installation selon la revendication 15, dans laquelle lesdits moyens de chargement du matériau en plastique dans la trémie comprennent un premier système de transport pneumatique (3) connectable à l'admission dudit souffleur.

17. Installation selon la revendication 16, dans laquelle ledit circuit d'introduction de gaz de procédé permet de remettre en circulation le gaz de procédé quittant ladite trémie dans ledit souffleur, et de premières vannes de sélection (30) sont prévues pour connecter l'admission dudit souffleur alternativement à la sortie de ladite trémie ou audit premier circuit de transport pneumatique.

18. Installation selon la revendication 16 ou 17, dans laquelle une seconde vanne de sélection (31) est prévue dans ledit circuit d'introduction de gaz de procédé pour connecter l'extrémité de déversement dudit souffleur alternativement à l'entrée de ladite trémie ou à une sortie d'évacuation (32).

19. Installation selon l'une quelconque des revendications 15 à 18, dans laquelle ladite trémie peut être connectée à au moins une machine (M) qui utilise ledit matériau en plastique, afin de transférer le matériau en plastique évacué de la trémie à au moins une machine d'utilisateur au moyen d'un second circuit de transport pneumatique (7) connectable à l'admission dudit souffleur.

20. Installation selon la revendication 19, dans laquelle ledit second circuit de transport pneumatique est connecté audit premier circuit de transport pneumatique en amont desdites premières vannes de sélection.

21. Installation selon l'une quelconque des revendications 15 à 20, dans laquelle une unité de déshumidification de gaz de procédé (17) est interposée dans ledit circuit d'introduction de gaz de procédé entre ledit souffleur et ladite trémie, ladite unité de déshumidification étant du type à régénération continue.
